# EUROPEAN PATENT APPLICATION

(11) **EP 2 127 734 A1**
(43) Date of publication of application: **02.12.2009**
(21) Application number: 08157054.1
(22) Date of filing: 28.05.2008
(51) Int. Cl.: B01F 1/00, B01F 3/08, B01F 5/00, B01F 13/10, B01F 15/00, A47J 31/40, B01F 3/12

(54) **Mixing assembly comprising a mixing chamber and an overflow chamber and process for mixing**

(71) Applicant: Nestec S.A., 1800 Vevey (CH)
(72) Inventor: Bernhardsgruetter, Raphael, 1350 Orbe (CH); Scorrano, Lucio, 1400 Yverdon-les-Bains (CH); Bbeausire, Cédric, 1372 Bavois (CH)
(74) Representative: Ducreux, Marie

(57) **Abstract**

The invention concerns a mixing assembly (1) comprising a mixing chamber (2) adapted to mix a soluble ingredient with a diluent, wherein the mixing assembly comprises an overflow channel (41), said overflow channel running along the external wall of the mixing chamber so that a liquid exceeding the capacity of the mixing chamber is able to flow in the overflow channel and the outlets (3) of the mixing chamber and the overflow channel allowing the liquid contained in the mixing chamber and the overflow channel to exit and mix in the same place.
The invention also concerns a process for mixing a soluble ingredient with a diluent using the above mixing assembly.

## Description

The present invention relates to a mixing assembly that provides a frothy product. More particularly, the invention relates to a mixing assembly for mixing, frothing and dispensing a beverage, and to a method for providing a frothy product.

Many beverages like espresso and other coffee, milk drinks, soups, ... are often prepared by mixing a powder or a liquid concentrate with water. Mixing devices are known for speedier preparation of such beverages and other foods by mixing a powdered food component with a liquid, such as water. These devices typically feed the soluble component into the water, which is often pumped into a mixing chamber to create a whirlpool to mix the soluble component into the water and creates foam. The frothed mixture is then usually evacuated from the mixing chamber by gravimetry through the bottom of the mixing chamber and dispensed into a receptacle for drinking.

One problem that often arises when the soluble ingredient creates foam during its dissolution in the mixing chamber is that the foam is the last to be evacuated because it lays on the top of the liquid in the mixing chamber. A consequence is that the foam is often only partly evacuated, last bubbles of foam staying in the bottom of the mixing chamber. Then the mixing chamber must be rinsed by clear water and the beverage does not comprise all the produced foam.

The object of the present invention is to provide a new mixing assembly that avoids the above problem and enables the production of a frothed beverage that can be evacuated from the mixing chamber without leaving a part of foam in the mixing chamber and consequently without necessity to rinse the chamber with clear water after preparation of the beverage.

In a first aspect, the present invention concerns a mixing assembly comprising a mixing chamber adapted to mix a soluble ingredient with a diluent, wherein the mixing assembly comprises an overflow channel so that a liquid exceeding the capacity of the mixing chamber is able to flow in the overflow channel and wherein the outlets of the mixing chamber and the overflow channel allow the liquid contained in the mixing chamber and the overflow channel to exit and mix in the same place.

The mixing assembly of the present invention comprises a mixing chamber which can be of any known kind and can take various shapes. In a preferred mode, the longitudinal upward wall is substantially cylindrical. Other shapes could be envisaged such as a polygonal, e.g., hexagonal, or oval section of the chamber, for instance. The bottom wall can be substantially a portion of truncated cone. The mixing chamber usually comprises an inlet opening for the introduction of soluble ingredient and of the diluent and an outlet for delivering the liquid mixed product issued from the dissolution of soluble ingredient. Usually, the inlet of the mixing chamber is on the top of the chamber so that soluble ingredient can be introduced by gravimetric fall inside the mixing chamber. The outlet of the mixing chamber is usually in the bottom of the mixing chamber. Generally the mixing chamber inlet opening is placed below the metering device, that delivers the soluble ingredient, because it is advantageous to take profit of the gravity force to let soluble ingredient falls in the mixing chamber, yet any other introduction of soluble ingredient in other sides of the mixing chamber for example through a side opening is possible. In the same way, the mixing chamber inlet opening is generally below the diluent feed opening because it is preferable to take profit of the gravity force to let diluent falls in the mixing chamber, yet any other introduction of diluent in other sides of the mixing chamber for example in a side opening is possible. In the preferred embodiment of the present invention, no wall or restriction is provided on the top part the mixing chamber, so that any liquid falling inside the mixing chamber and exceeding the volume capacity of the mixing chamber can freely flow outside the mixing chamber by overflowing over the upward walls of the mixing chamber. The absence of top wall provides also a big and easy inlet for the introduction of soluble ingredient and diluent. Preferably the mixing chamber is rotor free

The mixing chamber presents at least one outlet allowing the liquid to exit the mixing chamber. Said at least one outlet is usually placed in the bottom wall of the mixing chamber so that all mixed product is evacuated by gravimetry.

According to the present invention, the mixing assembly comprises an overflow channel so that the liquid exceeding the capacity of the mixing chamber is able to flow in the overflow channel. Said overflow channel can be a channel running along the external wall of the mixing chamber. The inlet of the overflow channel is generally placed at the top of the mixing chamber. Besides the liquid contained in the mixing chamber and the overflow channel exits and mixes in the same place. The outlets of the mixing chamber and the overflow channel can mix before delivering the liquid in a final recipient. For example, the outlet of the mixing chamber can be a pipe and the outlet of the overflow channel can emerge in said pipe. This configuration leads to a venturi effect when liquid flows simultaneously through the mixing chamber outlet and through the overflow channel outlet. This effect improves the suction of the liquid coming from the overflow channel. This embodiment is particularly interesting for liquid of which dilution creates foam because foam present on the top of the diluted liquid in the mixing chamber is mainly evacuated by the overflow channel and the venturi means improve the suction of said foam.

According to the preferred embodiment, the overflow channel is an overflow chamber surrounding the mixing chamber. The overflow chamber can be of any known kind and can take various shapes. Preferably, it presents the same form as the mixing chamber. It is placed relative to the mixing chamber so that the liquid overflowing from the mixing chamber falls directly into the overflow chamber.

The overflow chamber presents at least one outlet allowing mixed product to exit the overflow chamber. Said at least one outlet is usually placed in the bottom wall of the overflow chamber so that the liquid is evacuated by gravimetry.

According to the present invention, the outlets of the mixing chamber and the overflow chamber allow the mixed product contained in the mixing chamber and the overflow chamber to exit and mix in the same place. According to a preferred embodiment, the outlet(s) of the mixing chamber exit(s) in the overflow chamber. Preferably the total section of the outlet(s) of the mixing chamber is inferior or equal to the total section of the overflow chamber inlet so that most of the liquid introduced in the assembly evacuates through the overflow chamber rather than through the outlet(s) of the mixing chamber. Generally, when the soluble ingredient is introduced in the mixing chamber, it partially closes the outlet(s) of the mixing chamber before it is totally diluted ; this partial closure helps for creating the overflow of the liquid in the overflow channel or chamber. Then, all the foam is able to leave the assembly through the overflow channel rather than through the mixing chamber outlet(s).

Usually the assembly of the present invention is housed in a dispensing device.

In a second aspect, the invention concerns a process for mixing a soluble ingredient with a diluent using a mixing assembly as defined above comprising the steps of :
- introducing the soluble ingredient in the mixing chamber,
- introducing the diluent in the mixing chamber in a quantity and with a flow such that the liquid resulting from the dissolution of the soluble ingredient exceeds the capacity of the mixing chamber and flows partially in the overflow chamber.

The method applies either for a soluble ingredient that is a powder or a liquid concentrate. It is especially adapted for producing a diluted product with foam in particular food or beverage products like espresso coffee or frothed milk. The diluent is usually hot water. The production of foam inside the mixing chamber can be the result of the foaming nature of the soluble ingredient, it can also be improved by the way the diluent is introduced in the chamber, for example by the force of the diluent jet, and by the form of the mixing chamber or the presence of foaming device inside the chamber like a sieve or baffles.

According to the process of the present invention, once the soluble ingredient has been introduced in the mixing chamber, the diluent is introduced in a quantity and with a flow such that the liquid resulting from the dissolution of the soluble ingredient exceeds the capacity of the mixing chamber and flows partially in the overflow chamber. The control of said "overflowing" step is based on the properties of the mixing chamber that are its internal volume and the geometry of its outlet(s). The geometry of its outlet(s) defines the maximum flow at which the liquid can be evacuated from the mixing chamber. Based on this maximum flow, the diluent is introduced in the mixing chamber at a flow that is superior to the maximum flow at which the liquid can be evacuated from the mixing chamber and in a quantity that is superior to internal volume of the mixing chamber. In this way, the liquid level raises in the mixing chamber until it overflows.

During the step of introducing the diluent, the foam that is produced floats on the liquid. Then, when the liquid exceeds the capacity of the mixing chamber, the foam is the first to fall inside the overflowing chamber and is then totally evacuated from the mixing chamber through the overflowing chamber. As the foam is the first to fall inside the overflowing chamber and is pushed by the liquid continuing to be introduced in the mixing chamber, no foam remains in the overflowing chamber : the latter is rinsed by the liquid overflowing the mixing chamber behind the foam. No foam is evacuated through the outlet(s) of the mixing chamber avoiding bubbles of foam to stay in the bottom of the mixing chamber.

The quantity of diluent introduced in the mixing chamber must be sufficient to have all the foam leave the mixing chamber before stopping the introduction of diluent. This quantity can also be adapted according to the foaming capacity of the soluble ingredient

The characteristics and advantages of the invention will be better understood in relation to the figures which follow:
- Figure 1 is a top view of a mixing assembly according to the present invention;
- Figure 2 is a sectional side view of the mixing assembly of Figure 1 ;
- Figure 3 is a cross section view of the mixing assembly where the overflow channel is an overflow chamber;
- Figures 4 to 7 depict the process for producing a foaming beverage with the mixing assembly of Figure 3.

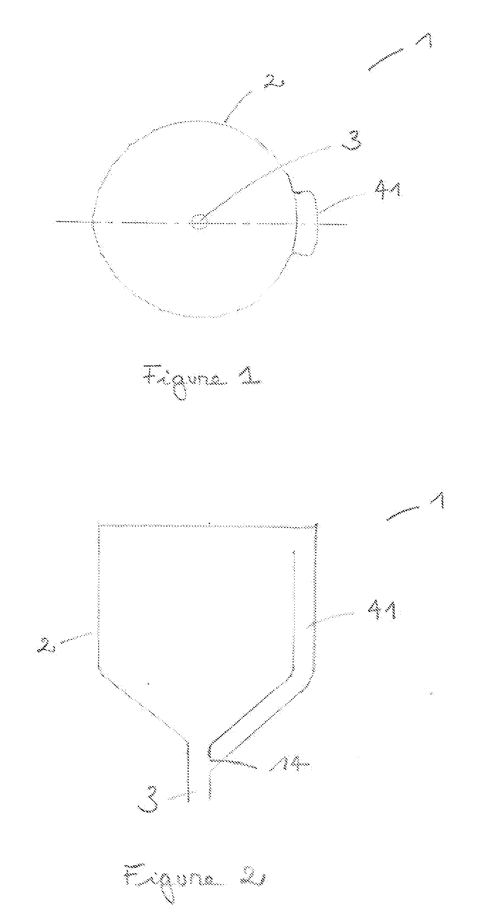

Figures 1 and 2 illustrate a mixing assembly 1 according to the present invention comprising a mixing chamber 2 and an overflow channel 41 which runs along the external wall of the mixing chamber. Then liquid reaching the upper part of the mixing chamber can flow through the overflow channel. The mixing chamber 2 presents one outlet 3 in its bottom wall. The outlet 3 is a pipe in which the outlet 14 of the overflow channel 41 emerges.

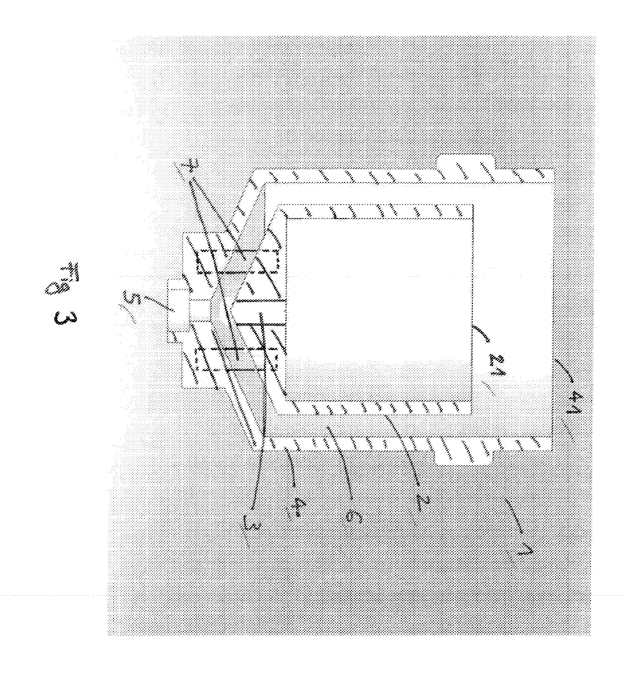

Figure 3 illustrates a mixing assembly 1 according to the present invention comprising a mixing chamber 2 and an overflowing chamber 4 which surrounds the mixing chamber. The two chambers 2, 4 are concentric. A space 6 exists between the external wall of the mixing chamber 2 and the internal wall of the overflowing chamber 4 ; it enables the passage of the liquid that overflows from the mixing chamber 2. Preferably the top 41 of the overflowing chamber 4 is higher than the top 21 of the mixing chamber 2. The mixing chamber 2 presents one outlet 3 in its bottom wall emerging in the space 6 between the both chambers 2, 4. The overflowing chamber 4 presents one outlet 5 for evacuating the liquid coming from the outlet 3 of the mixing chamber 2 and the liquid and the foam overflowing from the mixing chamber 2. The mixing chamber 2 is fixed inside the overflowing chamber 4 by at least two pins 7 introduced in respective part of the mixing chambers.

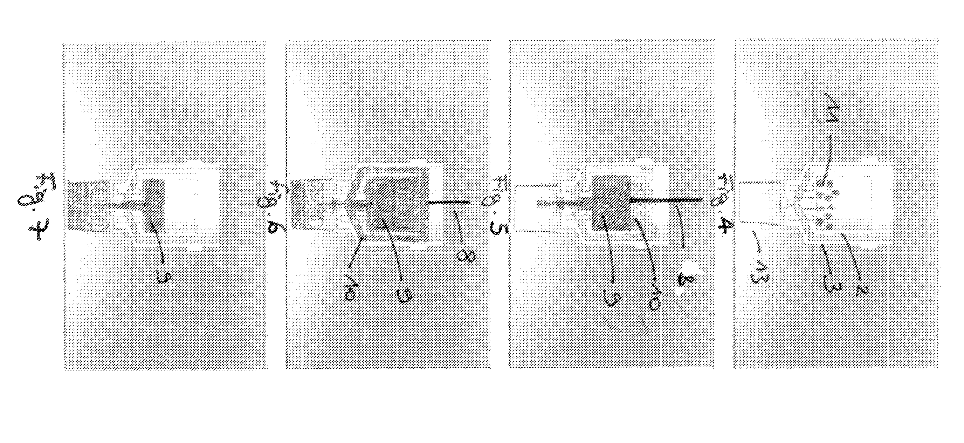

Figures 4 to 7 illustrate the process for producing a foaming beverage with a mixing assembly of the present invention comprising an overflow chamber 2. First soluble ingredient 11 is introduced inside the mixing chamber 2 (Fig. 4). Then, diluent 8 is introduced in the mixing chamber 2 (Fig. 5). The mixing of diluent and soluble ingredient 11 creates a liquid beverage 9 and foam 10 on the top of the liquid 9. The foam 10 overflows the mixing chamber 2 and enters the space 6 between the both chambers 2, 4. Simultaneously liquid beverage 9 flows through the mixing chamber outlet 3 and falls inside a receptacle 13. As described in Figure 6, so much diluent 8 is introduced in the mixing chamber 2 that the mixing chamber is full of liquid and all the foam is evacuated from the mixing chamber through the overflowing chamber 4. A part of the liquid beverage 9 is also evacuated from the mixing chamber through the overflowing chamber 4 after the foam. This liquid beverage rinses the space 6 between the chambers 2, 4 preventing any bubbles from staying in said space 6. Lastly, the introduction of diluent is stopped and the rest of liquid 9 is evacuated from the mixing chamber 2 through the mixing chamber outlet 3 (Figure 7). No foam stays in the mixing chamber since it has been evacuated by the top of said chamber and the liquid beverage has totally rinsed the mixing chamber. No foam stays in the overflow chamber since it has been evacuated first from said chamber and the liquid beverage has rinsed said chamber after the passage of the foam.

## Claims

1. A mixing assembly 1 comprising a mixing chamber (2) adapted to mix a soluble ingredient with a diluent, wherein the mixing assembly comprises an overflow channel (41) so that a liquid exceeding the capacity of the mixing chamber is able to flow in the overflow channel and wherein the outlets of the mixing chamber and the overflow channel allow the liquid contained in the mixing chamber and the overflow channel to exit and mix in the same place.

2. A mixing assembly according to Claim 1, wherein the overflow channel runs along the external wall of the mixing chamber.

3. A mixing assembly according to Claim 1 or 2, wherein the outlet (3) of the mixing chamber (2) is a pipe and the outlet (14) of the overflow channel (41) emerges in said pipe.

4. A mixing assembly according to any of Claims 1 to 3, wherein the overflow channel is an overflow chamber (4) surrounding the mixing chamber (2).

5. A mixing assembly according to Claim 4, wherein the at least one outlet (3) allowing the liquid to exit the mixing chamber (2) exits in the overflow chamber (4).

6. A mixing assembly according to Claim 1, wherein it is housed in a dispensing device.

7. A process for mixing a soluble ingredient with a diluent using a mixing assembly according to any of Claims 1 to 5 comprising the steps of :
- introducing the soluble ingredient in the mixing chamber (2),
- introducing the diluent in the mixing chamber (2) in a quantity and with a flow such that the liquid resulting from the dissolution of the soluble ingredient exceeds the capacity of the mixing chamber and flows partially in the overflow channel (4, 41),
- stopping the introduction of diluent.

8. A process according to Claim 7 wherein the soluble ingredient presents foaming properties.

9. A process according to Claim 7 or 8 wherein the diluent is introduced in the mixing chamber in order to make soluble ingredient foamed.

10. A process according to any of Claims 7 to 9 wherein the diluent is introduced in the mixing chamber at a flow that is superior to the maximum flow at which the liquid is able to be evacuated from the mixing chamber and in a quantity that is superior to internal volume of the mixing chamber.
